# EUROPEAN PATENT APPLICATION

(11) **EP 1 251 651 A1**
(43) Date of publication of application: **23.10.2002**
(21) Application number: 01440106.1
(22) Date of filing: 17.04.2001
(51) Int. Cl.: H04J 14/02, H04B 10/24

(54) **Method for bi-directional transmission of wavelength in a WDM transmission system and a WDM transmission system and optical nodes therefore**

(71) Applicant: ALCATEL, 75008 Paris (FR)
(72) Inventor: Bisson, Arnaud, Faller, 91400 Orsay (FR); Noirie, Ludovic, 92220 Bagneux (FR); Faure, Jean-Paul, 75014 Paris (FR)
(74) Representative: Brose, Gerhard

(57) **Abstract**

The invention relates to a method for bi-directional transmission in a wavelength division multiplex transmission system (below WDM = wavelength division multiplex) with optical carriers or (wavelength) channels, the frequencies or wavelengths of which are closely adjacent, in which the channels are grouped in bands (B1", B2", B3", B4") each with a defined number of adjacent carrier frequencies and WDM signals of channels of adjacent bands (B1", B2") in each case are transmitted in opposite directions of a waveguide, as well as a WDM transmission system and an optical node for this.

## Description

The invention relates to a method for bi-directional transmission of wavelengths in a WDM transmission system as well as to a WDM transmission system and an optical node.

In modern optical transmission systems or networks, the so-called wavelength division multiplex method, WDM, is used predominantly today, in which a number of modulated optical carriers, the frequencies of which differ, are transmitted simultaneously in an optical waveguide. The reciprocal optical influencing (crosstalk) of the individual carriers is so small here that each of the said carriers is formed as an independent (wavelength) channel. Current WDM (transmission) systems with so-called dense wavelength division multiplex, exhibit for example 40 channels with a frequency spacing distance of 100 GHz or 80 channels with a frequency spacing distance of 50 GHz.

The terms channel and wavelength are often used synonymously below, as in the specialist literature also. The term channel is used principally here if a communications context is involved, while the term wavelength is preferred if physical processes, for example filtering and reflecting individual wavelengths, are involved. The term wavelength is also used as an abbreviation for wavelength signal or WDM signal, i.e. the modulated carrier signal of a corresponding wavelength.

In classic WDM systems, at each optical node, normally a so-called demultiplexer, the wavelengths are disentangled and handled further individually, for example individual wavelengths are extracted, and the other wavelengths including further additional wavelengths are combined and routed onwards by means of a multiplexer. With increasingly more densely arranged wavelengths, a substantial filter outlay must be implemented to separate out individual wavelengths. A suitable filter must have a filter characteristic with steep edges relative to the filter width, so that only the desired wavelength is filtered out free of distortion without parts of adjacent wavelengths.

More modern WDM systems with so-called add-drop multiplexers permit the grouping of channels of adjacent wavelengths in so-called (wavelength) bands. Here the channels of individual bands can be separated from the totality of channels, i.e. the frequency spectrum used for optical transmission of the various WDM signals, at the add-drop multiplexers by means of broadband filters. Admittedly, even these broadband filters must have extremely steep edges. A reduction in this outlay, i.e. less steep edges, can then be achieved if the channels of one or more wavelengths respectively between two adjacent bands in each case are dispensed with for transmission. However, the transmission capacity of the WDM system is thereby reduced.

A known solution with the possibility of using filters of low selectivity without reducing the transmission capacity of the WDM system consists in allowing bi-directional transmission, in which adjacent channels are transmitted alternately in the opposite direction of a waveguide, thus causing doubling of the wavelength spacing of the wavelengths in a direction. Reduced demands are thus made on a suitable filter of an add-drop multiplexer described above with regard to its edge steepness. Admittedly, this solution results in neither a coherent spectrum of adjacent wavelengths nor a broadband signal, for example for so-called optical code multiplex methods, being able to be transmitted. In addition, very high demands are still made on the said filters, as only one wavelength in each case is omitted between two adjacent bands or channels.

The object of the invention is to produce a method and suitable means for this, which in a WDM system with bi-directional transmission of closely adjacent wavelengths permit individual bands to be separated from the corresponding WDM spectrum by means of broadband filters of low selectivity, without the transmission capacity of the WDM system being reduced.

This object is achieved according to the invention by a method according to the doctrine of claim 1, a WDM system according to the doctrine of claim 3 and an optical node according to the doctrine of claim 4.

In the following, WDM signals with equidistant carrier frequencies are always assumed. Owing to the reciprocal relationship of wavelength and frequency, the wavelength spacing decreases as the frequency increases. Since the frequency band used for optical transmission is very narrow, however, a likewise very narrow wavelength band results, for example within 1525-1610 nm, with likewise roughly equidistant wavelengths.

The fundamental idea of the invention consists in the fact that the wavelengths of a WDM system with closely adjacent wavelength channels are grouped in bands with a fixed number of individual adjacent wavelengths and adjacent bands in each case are transmitted in opposite directions of a waveguide.

Further configurations of the invention can be inferred from the dependent claims and the following description.

The invention is explained further below with the aid of the enclosed drawings:
- Fig. 1: shows diagrammatically a band arrangement of a unidirectional WDM system according to the prior art,
- Fig. 2: shows diagrammatically a band arrangement of a bi-directional WDM system according to the prior art and
- Fig. 3: shows diagrammatically a band arrangement of a bi-directional WDM system according to the invention.

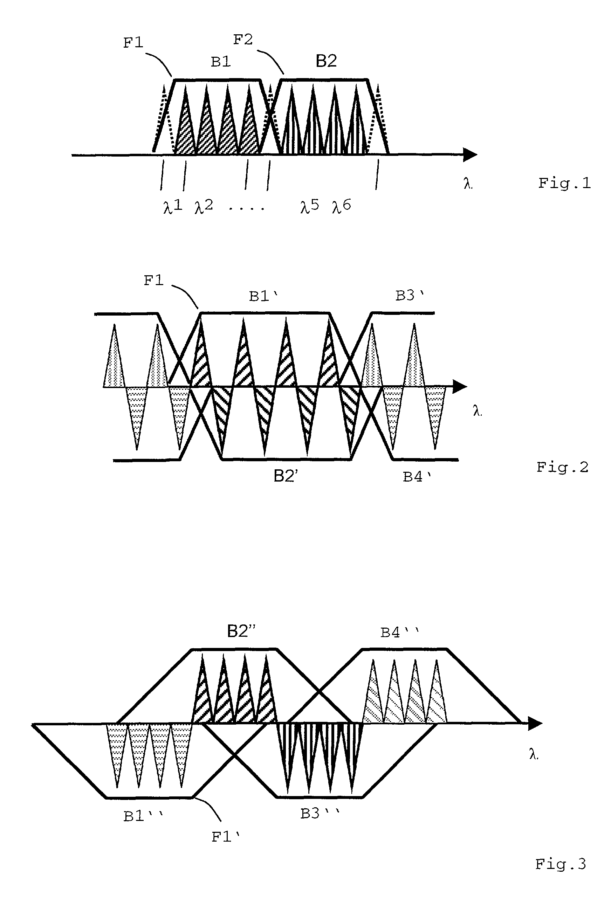

Fig. 1 shows diagrammatically a band arrangement of a unidirectional WDM system known from the prior art. Laid off along an abscissa λ for example are the wavelengths λ1 - λ11 of carriers of the signals of a WDM system, symbolized here by narrow triangles. Furthermore, two bands B1 and B2 are drawn in, which each contain for example 4 drawn-in wavelengths λ2 - λ5 and λ7 - λ10. Two idealized trapezoidal filter curves F1 and F2 of an (optical) broadband filter in each case are also drawn in, which in the area of the wavelengths λ2 - λ5 and λ7 - λ10 respectively show a constant progression and the descending or ascending filter edges of which mutually overlap in the area of wavelength λ6 and overlap with other filter curves not shown here of further corresponding broadband filters in the area of wavelengths λ1 and λ11.

The wavelengths λ1 - λ11 shown represent an extract of the wavelengths of the WDM system in which the wavelengths are separated not individually, but combined as bands B1 or B2 at nodes of the WDM system, for example add-drop multiplexers. Separation of a band B1 or B2 is performed by means of broadband filters, for example by means of so-called thin films. In the event that these broadband filters have a virtually rectangular filter curve, the filter edges of which are so steep that they can separate two adjacent wavelengths, all wavelengths of the WDM system can be arranged in bands and used for a transmission. Highly selective filters of this kind, i.e. filters with steep edges of this kind, are difficult to realize in practice. Therefore, as shown in Fig. 1, individual wavelengths λ1, λ6 and λ11 are not used for transmission, but are used to separate the bands of the WDM system. At the said wavelengths λ1, λ6 and λ11, the filter curves of the bands may overlap and thus permit filter curves F1 and F2 with less steep filter edges, i.e. broadband filters with rather lower selectivity. Admittedly, it is thus accepted that the transmission capacity of the WDM system is reduced.

Fig. 2 shows diagrammatically a further band arrangement of a bi-directional WDM system known from the prior art. Compared with unidirectional WDM systems, bi-directional WDM systems offer advantages with regard to better channel utilization, especially if the WDM system is realized as a dynamically reconfigurable system. In frequently WDM ring systems, a direction with the smaller number of nodes to be overcome can preferably be chosen, for example. As in Fig. 1, a series of wavelengths symbolized by narrow triangles is shown along the abscissa λ. The wavelengths are each transmitted individually alternately in opposite directions. This is symbolized by wavelengths laid off alternately positively and negatively along the abscissa. The modified bands B1', B2', B3' and B4' each contain for example four adjacent wavelengths in a direction. Here the modified bands B1' and B3' are transmitted in one direction and the modified bands B2' and B4' are transmitted in the opposite direction. A modified filter curve F1' of a broadband filter drawn in by way of example is used to separate the first modified band B1'.

Owing to direction separation in the nodes of the bi-directional WDM system, both the spectra of two bands of a different transmission direction and the filter curves of two filters for separating bands of a different transmission direction may overlap arbitrarily. Since the spacing of adjacent wavelengths of one direction is here twice as great compared to the wavelength spacing of adjacent wavelengths of a unidirectional WDM system of the same kind, the requirement in respect of the selectivity of the broadband filters can be reduced compared with the unidirectional WDM system without having to accept a reduction in transmission capacity, i.e. without reserving individual wavelengths for filter purposes. The requirement for filter edge steepness of the modified filter curve F1' corresponds to the filter edge steepness of filter curves F1 and F2 described under Fig. 1. Admittedly, owing to the double wavelength spacing, the broadband filter with the modified filter curve F1' is on the whole correspondingly wider.

Since the wavelength spacing becomes increasingly smaller with the progressive development of WDM systems, the requirements in respect of filter selectivity increase accordingly. The alternating direction assignment of the wavelengths also leads to neither a coherent spectrum of adjacent wavelengths nor a broadband signal, for example for so-called optical code multiplex methods, being able to be transmitted. To solve these problems, an advantageous grouping according to the invention of wavelengths of a bi-directional WDM system according to the invention is undertaken in Fig. 3.

For this purpose, Fig. 3, like the previous figures, shows a series of wavelengths symbolized by narrow triangles represented equidistantly along the abscissa λ. In contrast to Figure 2, the transmission direction is not changed here

## Claims

1. Method for bi-directional transmission in a wavelength division multiplex transmission system (below WDM = wavelength division multiplex) with optical carriers or (wavelength) channels, the carrier frequencies or wavelengths of which are closely adjacent, in which
• the channels are grouped in bands (B1", B2",B3", B4") each with a defined number of adjacent wavelengths and
• WDM signals of channels of adjacent bands (B1", B2") in each case are transmitted in opposite directions of a waveguide.

2. Method according to claim 1, **characterized in that** at optical nodes of the WDM transmission system, the channels of one band or several bands (B1", B2", B3", B4") respectively are separated in each case by means of broadband filters of low selectivity (F1") from the totality of channels.

3. WDM transmission system for transmitting WDM signals with closely adjacent wavelengths, with
• grouping means for grouping adjacent channels in bands (B1", B2", B3", B4") and
• transmission means for transmitting the WDM signals of channels of adjacent bands (B1", B2") in opposite directions of a waveguide.

4. Optical nodes for use in a bi-directional WDM transmission system with WDM signals with optical carriers or channels, the carrier frequencies or wavelengths of which are closely adjacent, with
• receiving means for receiving WDM signals of one or more bands (B1", B2", B3", B4") of adjacent channels,
• a broadband filter of low selectivity (F1") for separating WDM signals of a band (B1" B2", B3", B4") and
• forwarding means for forwarding the WDM signals of separated bands (B1", B2", B3", B4") to other optical devices.
